# EUROPEAN PATENT SPECIFICATION

(11) **EP 3 504 574 B1**
(45) Date of publication and mention of the grant of the patent: **06.08.2025**
(21) Application number: 18814333.3
(22) Date of filing: 06.06.2018
(51) Int. Cl.: G02B 21/00, G01N 21/64

(54) **MULTI-FOCAL STRUCTURED ILLUMINATION MICROSCOPY SYSTEMS AND METHODS**
MULTIFOKALE STRUKTURIERTE BELEUCHTUNGSMIKROSKOPIESYSTEME UND VERFAHREN
SYSTÈMES ET PROCÉDÉS DE MICROSCOPIE À ÉCLAIRAGE STRUCTURÉ À FOYERS MULTIPLES

(30) Priority: 06.06.2017 US 201715614766
(43) Date of publication of application: 03.07.2019
(73) Proprietor: The United States of America, as represented by the Secretary, Department of Health and Human Services, Bethesda, MD 20892-7660 (US)
(72) Inventor: SHROFF, Hari, Bethesda, Maryland 20892-7660 (US); YORK, Andrew, Bethesda, Maryland 20892-7660 (US)
(74) Representative: Zacco Denmark A/S
(86) International application number: PCT/US2018/036265
(87) International publication number: WO 2018/226836

(56) References cited:
- WO-A1-2013/126762
- WO-A1-2015/164843
- WO-A1-2015/164844
- DE-A1- 102013 005 927
- JP-A- 2006 220 818
- US-A1- 2007 146 869
- US-A1- 2015 131 148
- US-A1- 2016 161 728
- US-A1- 2016 320 596

## Description

### FIELD

This document relates to multi-focal structured illumination microscopy, and in particular, to multi-focal structured illumination microscopy systems and methods for producing a plurality of multi-focal fluorescent emissions resulting from multi-focal patterns of a sample.

### BACKGROUND

Classical fluorescence microscopy is limited in resolution by the wavelength of light, referred to as the "diffraction limit", which restricts lateral resolution to about 200 nm and axial resolution to about 500 nm at typical excitation and emission wavelengths when a sample emits fluorescence that is detected by the microscope. Confocal microscopy is an optical imaging technique used to increase optical resolution beyond the diffraction limit by using point illumination and a spatial pinhole arrangement to eliminate out-of-focus emission light from specimens that are thicker than that of the focal plane, thereby delivering images with 1.41 times the resolution than the diffraction limit by a method that requires tightly closing the pinhole. Unfortunately, closing the pinhole diminishes the signal level of the emitted light from the sample to such an extent as to make this particular method of super-resolution impractical. In addition, a confocal microscope must perfectly align the excitation from the microscope's illumination beam with the pinhole/detector, since a misaligned pinhole results in a reduced and weak light signal being detected as well as resulting in reduced axial optical sectioning of the sample itself. As such, misalignment of the confocal microscope can cause a reduction in the light signal. WO 2013/126762 A1 relates to multi-focal structured illumination microscopy.

A method for resolution enhancement for confocal microscopy has been found that uses an array of detectors, such as pixels in a camera image, wherein each of the detectors in the array produces a separate confocal image. If the array of detectors is sufficiently small, each of the formed confocal images can be equivalent to similar confocal images formed by a confocal microscope with a tightly closed pinhole such that 1.41 times the resolution of the diffraction-limited microscope is achieved when the confocal images are properly aligned. In addition, deconvolution provides a further increase in image resolution. However, this detector array arrangement is limited since only a single excitation point is scanned throughout a two-dimensional plane of the sample, which limits the speed the sample can be scanned and subsequent detection of the fluorescence emissions of the sample.

Another type of microscopy, referred to as structured illumination microscopy (SIM), illuminates a sample with spatially modulated excitation intensity, which is translated and rotated in different positions relative to the sample, with a wide-field image being taken at each translation and rotation. Processing the raw images appropriately results in a final image having double the lateral resolution of conventional wide-field microscopy. Although such SIM systems generate images with 2x the spatial resolution of a conventional microscope, there is still a sacrifice in temporal resolution when producing the final image, as time is required to acquire each of the multiple raw images. SIM may also be used to reject out-of-focus blur, known as "optical sectioning". However, such optical-sectioning is performed computationally, and is thus subject to shot (Poisson) noise. SIM is thus inappropriate for thick or highly stained samples, when background fluorescence may cause this shot noise contribution to overwhelm the in-focus signal.

As such, there is a need in the art for a structured illumination microscopy system that produces a multi-focal excitation pattern of the sample for each high resolution image without sacrificing scanning speed, and that is resistant to the shot noise that may corrupt SIM images.

### SUMMARY

WO 2013/126762 A1 discloses a microscopy system that may include a light source for transmitting a single light beam and a beam splitter for splitting the single light beam into a plurality of light beams forming a multi-focal pattern. A scanner scans the plurality of light beams that forms the multi-focal pattern onto a sample such that the sample generates a plurality of fluorescent emissions resulting from each multi-focal pattern. A focusing component then defines an aperture configured to physically block out-of-focus fluorescence emissions of the plurality of fluorescent emissions resulting from each multi-focal pattern and allows through in-focus fluorescent emissions to a pass through the aperture. In addition, a scaling component scales down the plurality of in-focus fluorescent emissions resulting from each multi-focal pattern such that each of the plurality of in-focus fluorescent emissions is scaled down by a predetermined factor to produce a plurality of scaled in-focus fluorescent emissions resulting from each multi-focal pattern. A summing component sums each of the plurality of scaled in-focus fluorescent emissions to produce a plurality of summed, scaled in-focus fluorescent emissions that form a composite image of the plurality of summed, scaled in-focus fluorescent emissions.

In another embodiment of WO 2013/126762 A1, a microscopy system may include a light source for transmitting a single light beam; a beam splitter for splitting the single light beam into a plurality of light beams forming a plurality of multi-focal patterns, wherein each of the plurality of multi-focal patterns defines a plurality of focal points; a scanner for scanning the plurality of light beams that forms each of the plurality of multi-focal patterns onto a sample such that the sample generates a plurality of fluorescent emissions resulting from each of the multi-focal patterns, wherein each of the plurality multi-focal patterns defines a plurality of fluorescent focal points; a detector for collecting the plurality of fluorescent emissions resulting from each of the multi-focal patterns; and a processing system for processing the collected multi-focal fluorescent emissions from the detector comprising: a processor in operative communication with a database for storing the plurality of collected multi-focal fluorescent emissions, wherein the processor removes out-of-focus fluorescent emissions resulting from each of the plurality of multi-focal patterns to leave only in-focus fluorescent emissions resulting from each of the plurality of multi-focal patterns, wherein the processor then scales the in-focus fluorescent emissions resulting from each of the plurality of multi-focal patterns in a local contraction operation in which each of the plurality of fluorescent emissions resulting from each of the multi-focal patterns maintains the same proportional distance from another plurality of fluorescent emissions resulting from the multi-focal pattern as the plurality of fluorescent emissions contract to produce scaled, in-focus fluorescent emissions; wherein the processor sums the plurality of multi-focal in-focus fluorescent emissions to produce a composite image.

In yet another embodiment of WO 2013/126762 A1, a method for multi-focal structured illumination microscopy may include:
generating a single light beam;
splitting the single light beam into a plurality of light beams in which the focal point of each the plurality of light beam forms a plurality of multi-focal patterns,
illuminating a sample with the plurality of light beams forming each of the plurality of multi-focal patterns, wherein the illuminated sample produces a plurality of fluorescent emissions resulting from each the plurality of multi-focal patterns;
performing a pinholing operation in which out-of-focus fluorescent emissions from the plurality of fluorescent emissions are blocked and only in-focus fluorescent emissions from the plurality of fluorescent emissions are permitted to pass through during the pinholing operation;
scaling each focal point of the plurality of in-focus fluorescent emissions resulting from the plurality of multi-focal patterns by a predetermined factor to produce a plurality of scaled, in-focus fluorescent emissions resulting from the plurality of multi-focal patterns; and
summing each of the plurality of scaled, in-focus fluorescent emissions to form a composite image.

In an embodiment of the present invention, a microscopy system may include a light source for transmitting a single light beam. A first microlens array that splits the single light beam into a plurality of light beams for forming at least one multi-focal pattern and a scanner that scans the plurality of light beams that forms the at least one multi-focal pattern onto a sample such that the sample generates a plurality of fluorescent emissions with each of the at least one multi-focal pattern. In addition, a pinhole array blocks out-of-focus fluorescent emissions for each of the at least one multi-focal pattern and allows through in-focus florescent emissions to pass through the pinhole array. A second microlens array produces a non-inverted image of the plurality of light beams having a one half a magnification, wherein the scanner rescans the non-inverted image of the plurality of light beams. Finally, a camera captures the scanned non-inverted image.

In a further embodiment falling outside of the scope of the present invention, a microscopy system may include a light source for transmitting a single light beam; a spinning disk with a microlens array for splitting the single light beam into a plurality of light beams forming a multi-focal pattern; a spinning disk with a pinhole array for blocking out-of-focus light beams of the plurality of light beams for each multi-focal pattern and allowing through in-focus light beams of the plurality of light beams to pass through the spinning disk with a pinhole array, wherein the spinning disk with a microlens array is rotated in tandem with the spinning disk with a pinhole array for scanning the plurality of light beams across a sample and generating a plurality of fluorescent emissions; and a camera for capturing an image of the plurality of fluorescent emissions in each multi-focal pattern generated by the sample.

In another embodiment falling outside of the scope of the present invention, a microscopy system may include a light source for transmitting a single light beam; a first spinning disk with converging microlens array for rotation in a first direction and positioned along an optic axis for splitting the single light beam into a plurality of light beams forming a multi-focal pattern. A second spinning disk with a pinhole array for rotation in the first direction and positioned along the optic axis for blocking out-of-focus light beams of the plurality of light beams for each multi-focal pattern and allowing through in-focus light beams of the plurality of light beams to pass through the spinning disk with a pinhole array and a third spinning disk with a diverging microlens array for rotation in the first direction and positioned along the optic axis, wherein the first spinning disk with converging microlens array, the second spinning disk with a pinhole array, and the third spinning disk with a diverging microlens array rotate in sync relative to each other.

Additional objectives, advantages and novel features will be set forth in the description which follows or will become apparent to those skilled in the art upon examination of the drawings and detailed description which follows.

### BRIEF DESCRIPTION OF THE DRAWINGS

FIG. **1** is a simplified block diagram illustrating one method for generating a multi-focal pattern in a multi-focal structured illumination (MSIM) system;
FIG. **2** is a simplified block diagram illustrating another method for generating a multi-focal pattern in another embodiment of the multi-focal SIM system;
FIG. **3** is a simplified illustration showing the various components for one embodiment of the multi-focal SIM system of FIG. **1****;**
FIG. **4** is a simplified illustration showing the various components for one embodiment of the multi-focal SIM system of FIG. **2****;**
FIG. **5** is a simplified illustration showing a multi-focal pattern with a plurality of focal points; and
FIG. **6** is a simplified illustration showing a scaling operation that scales in-focus fluorescent emissions resulting from a multi-focal pattern emitted by a sample;
FIG. **7** is a flow chart illustrating one method for conducting a , scaling and summing operation by a processing system in the multi-focal SIM system of FIG. **4****;**
FIG. **8** is a flow chart illustrating one method for obtaining lattice vectors when executing the out-of-focus fluorescence rejection, scaling and summing operation of the processing system;
FIG. **9** is a flow chart illustrating one method for obtaining offset vectors when executing the out-of-focus fluorescence rejection, scaling and summing operation of the processing system;
FIG. **10** is a flow chart illustrating one method for obtaining shift vectors executing the out-of-focus fluorescence rejection, scaling and summing operations of the processing system;
FIG. **11** is a flow chart illustrating one method for pinhole masking when executing the out-of-focus fluorescence rejection, scaling and summing operation of the processing system;
FIG. **12** is a flow chart illustrating one method for scaling and local contraction when executing the out-of-focus fluorescence rejection, scaling and summing operation of the processing system;
FIG. **13** is a flow chart illustrating one method for summing when executing the out-of-focus fluorescence rejection, scaling and summing operation of the processing system;
FIG. **14** is a simplified illustration showing the illumination system used during testing of one embodiment of the multi-focal SIM system;
FIG. **15** illustrates various images of a sample embedded in fluoromount;
FIG. **16** illustrates various images of dual-labeled three-dimensional samples embedded in fluoromount; and
FIG. **17** illustrates various images of a sample using the multi-focal illumination system after pinhole focusing, scaling, and three-dimensional deconvolution;
FIG. **18** is a simplified illustration showing an embodiment for a swept-field hardware MSIM system;
FIG. **19** is an image of a super-resolution images of microtubules with swept-field MSIM system;
FIG. **20** is a simplified illustration showing an embodiment for a spinning disk confocal microscopy system; and
FIG. **21** is a simplified illustration showing an embodiment for a spinning disk MSIM system.

Corresponding reference characters indicate corresponding elements among the view of the drawings. The headings used in the figures should not be interpreted to limit the scope of the claims.

### DETAILED DESCRIPTION

In modern microscopy, structured illumination microscopy (SIM) may be used to examine single cells using spatially patterned light to excite sample fluorescence that is later detected and one or more images processed to produce a super-resolution image with 2x the resolution of a conventional wide-field microscopy image. However, the SIM system sacrifices speed for higher resolution (taking multiple raw images for each super-resolution image). Furthermore, optical-sectioning in a SIM system is performed computationally, and is thus prone to shot noise inherent in fluorescent background. This limits the thickness of the sample that can be examined, thereby requiring other microscopy techniques be used when examining thicker samples. For example, a confocal microscopy system physically rejects out-of-focus light using a pinhole arrangement that allows light from only a particular focal point from the emission light being emitted by the sample to be detected by the system, thereby producing high contrast, optically-sectioned images of relatively thicker samples than can be achieved by a SIM system. The confocal microscope is also capable of providing enhanced resolution relative to conventional wide-field microscopy. However, this enhanced image resolution by the confocal microscope is attained by stopping down the pinhole arrangement, which results in a corresponding prohibitive loss in the fluorescence emission signal being detected from the sample. A modified confocal microscope has been shown to improve image resolution to the resolution level of a SIM system without sacrificing emission signal strength; however, the slow scanning speed attained by the microscope makes it impractical for research purposes.

As such, embodiments of the multi-focal SIM (MSIM) system as set forth herein include particular hardware components, properties and characteristics that address issues related to achieving high image resolution at a high scanning speed and signal strength required by conventional microscopy imaging systems, and that provide better performance in thick samples than SIM systems that are currently commercially available. The MSIM system described herein includes various embodiments of hardware components that generate a multi-focal excitation pattern for each image taken of the sample to produce a high resolution image at high scanning rates without significant signal loss relative to conventional confocal microscopy and SIM systems. In addition, the MSIM system performs scaling, pinholing, and summing steps using just an arrangement of hardware components, such as pinholes mirrors, and micro-lens arrays rather than using a processor and software arrangement to perform the same operation, as in structured illumination microscopy. Further details of the multi-focal SIM systems and methods are discussed in greater detail below.

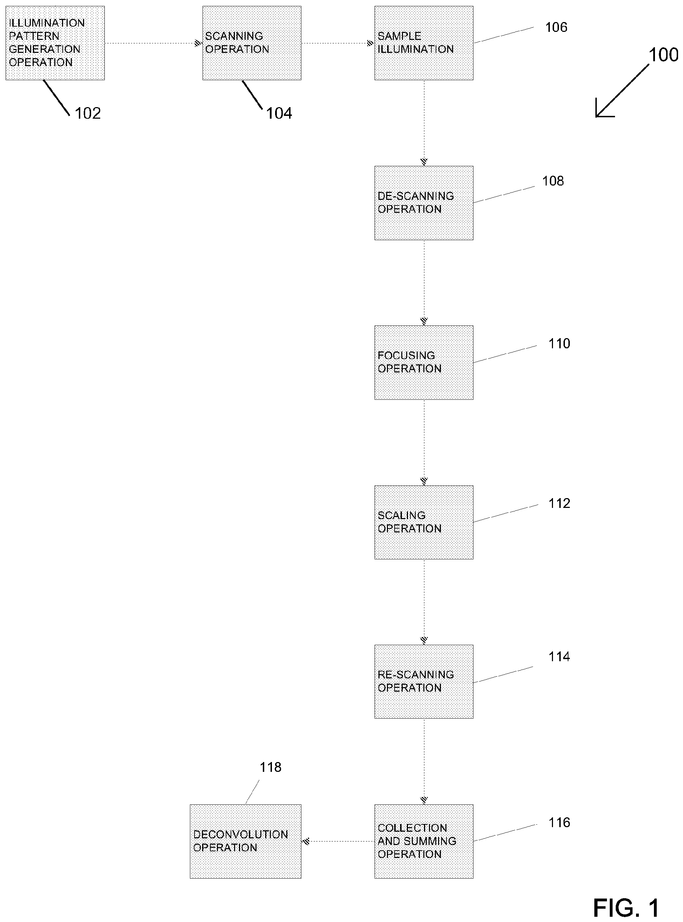

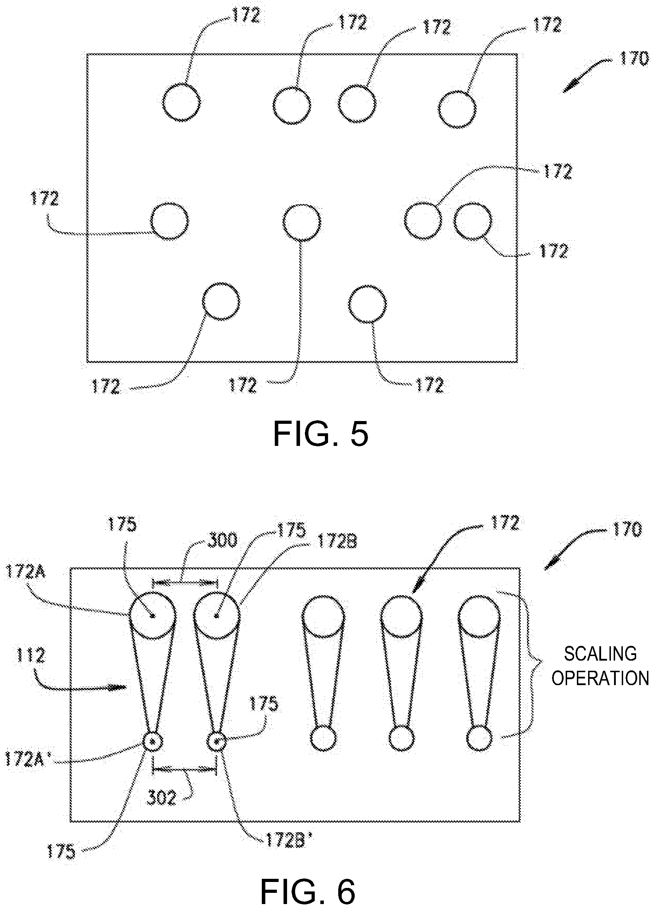

Referring to the drawings, various embodiments of the multi-focal SIM (MSIM) system are illustrated and generally indicated as **100, 200, 300, 400,** and **500** in FIGS. **1-21****.** As illustrated in FIG. **1****,** one general embodiment of the MSIM system, designated **100,** is shown. MSIM system **100** performs an illumination pattern generation operation **102,** which splits a single light beam into a plurality of light beams for generating one or more multi-focal patterns, in which each multi-focal pattern defines an arrangement of focal points for each of the plurality of light beams. For example, a simplified illustration of one example of a multi-focal pattern **170** is shown in FIG. **5****.** In one embodiment, the multi-focal pattern **170** may include a plurality of focal points **172** arranged in a particular multi-focal pattern **170** defined by the plurality of light beams with each multi-focal pattern **170** defining a different arrangement of focal points for the plurality of light beams such that multi-focal pattern **170** maximizes the distance between any two nearest focal points **172** for a given density of focal points **172,** thereby minimizing crosstalk. As used herein, the term crosstalk refers to the ability of nearby light beams to cause excitation and fluorescence from other focal points to appear as if focal points originate from the focal point in question. In a scanning operation **104,** the plurality of light beams in each multi-focal illumination pattern are rastered onto a sample **106** being illuminated such that the sample **106** emits a plurality of fluorescent emissions. The fluorescent emissions emitted by the sample **106** are rastered in a de-scanning operation **108** which redirects the plurality of fluorescent emissions for removal of out-of-focus fluorescent emissions in a focusing operation **110.** In the focusing operation **110,** out-of-focus fluorescent emissions are blocked and only in-focus fluorescent emissions are allowed to pass through for processing.

The in-focus fluorescent emissions caused by each multi-focal pattern are then scaled using a scaling operation **112** that locally contracts each of fluorescent emissions by a predetermined factor. In one embodiment of the scaling operation **112** illustrated in FIG. **6****,** a local contraction of the fluorescent foci **172** caused in a single multi-focal pattern **170** occurs. For example, the local contraction of fluorescent foci **172A** and **172B** to scaled fluorescent foci **172A'** and **172B',** respectively, in the multi-focal pattern **170** is such that the distance **300** between the geometric centers **175** of fluorescent foci **172A** and **172B** and the distance **302** of fluorescent foci **172A** and **172B** remains the same regardless of the degree of scaling applied to the fluorescent foci **172** of the multi-focal pattern **170.** In other words, the scaling operation **112** contracts the fluorescent foci **172** locally without inversion while keeping the relative distances between each of the fluorescent foci the same. After the scaling operation **112,** the scaled in-focus fluorescent emissions for each multi-focal illumination pattern are then rastered in a rescanning operation **114** that allows the contracted, in-focus fluorescent emissions caused by each multi-focal pattern to be collected by a detector and summed to produce a composite high resolution image in a collection and summing operation **116.**

In some embodiments of WO 2013/126762 A1, after the collection and summing operation **116** the composite image may undergo a deconvolution operation **118** that performs a level of de-blurring that further enhances the resolution of the composite image. The deconvolution operation **118** may be any conventional deconvolution operation **118,** such as the freely available Piotyr Wendykier's Parallel Iterative Deconvolution Plugin.

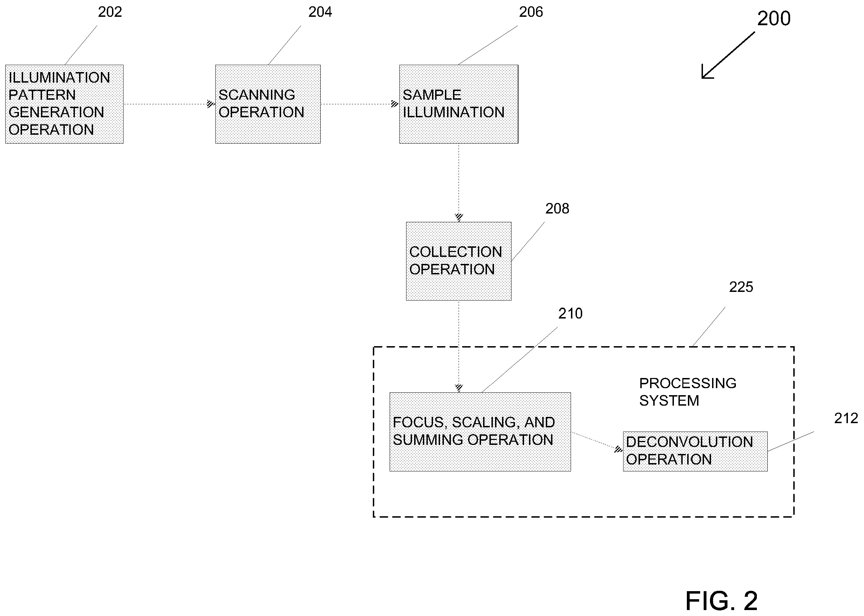

Referring to FIG. **2****,** another method for generating multi-focal patterns according to another embodiment of the MSIM system, designated **200,** is illustrated. MSIM system **200** performs an illumination pattern generation operation **202,** in which a single light beam is split into a plurality of light beams for generating one or more multi-focal patterns of the plurality of light beams. In a scanning operation **204,** the plurality of light beams for each multi-focal pattern is rastered onto a sample **206.** The sample **206** produces fluorescent emissions in response to the multi-focal patterns that are detected in a collection operation **208.** In the collection operation **208** a detector collects the in-focus fluorescent emissions and transmits the collected data to a processing system that performs a processing operation **210.** The processing operation **210** removes out-of-focus fluorescent emissions in each multi-focal pattern, scales the remaining in-focus fluorescent emissions, and then sums the scaled, in-focus fluorescent emissions to generate a composite image composed from the plurality of fluorescent emissions created by the multi-focal patterns. In some embodiments, the collected data may then undergo a deconvolution operation **212** similar to the deconvolution operation **118,** which performs a de-blurring of the composite image to further enhance image resolution.

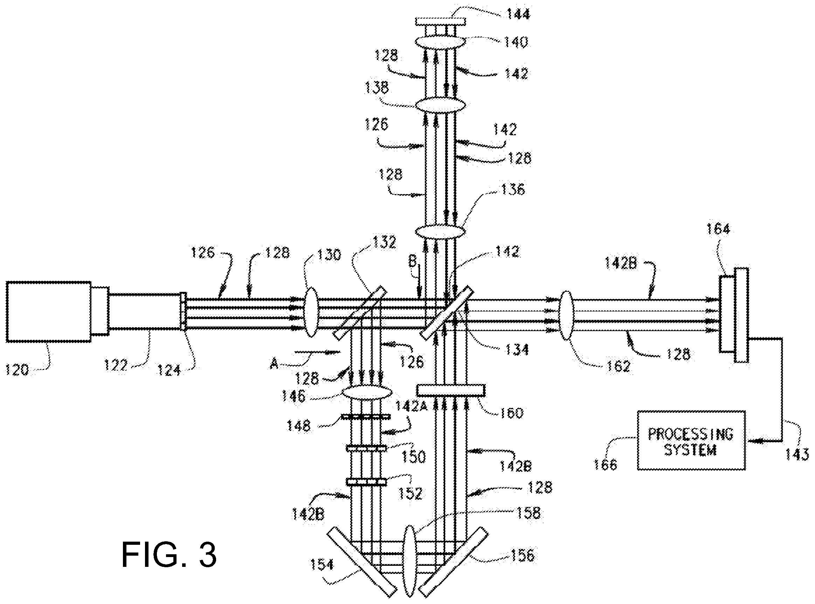

Referring to FIG. **3****,** one embodiment of the multi-focal SIM system **100** may include an illumination source **120,** for example a laser, for generating a single light beam **122** that is transmitted through a beam splitter **124,** such as a micro-lens array. The beam splitter **124** splits the single light beam **122** into a plurality of light beams **126** with each of the plurality of light beams **126** having a different focal point that collectively form a multi-focal pattern **128.** In some embodiments, a first lens **130** images each multi-focal pattern **128** through a dichroic mirror **132** in direction A and onto a scanning apparatus **134,** such as a galvanometer, to perform the scanning operation **104.**

During the scanning operation **104,** the scanning apparatus **134** rasters each multi-focal pattern **128** of the plurality of light beams **126** onto a sample **144** through an arrangement of a second lens **136,** a tube lens **138** and an objective lens **140** and onto the sample **144.**

In response to the sample **144** being illuminated by the multi-focal patterns **128** of the plurality of light beams **126,** the sample **144** emits fluorescent emissions **142** caused by the multi-focal patterns **128** composed of light beams **126.** The plurality of fluorescent emissions **142** for each multi-focal pattern **128** emitted by the illuminated sample **144** is then captured through the objective lens **140,** and passed through the tube lens **138** and second lens **136** and onto the scanning apparatus **134,** which de-scans each of the plurality of fluorescent emissions **142** by rastering the fluorescent emissions **142** from the second lens **136** and onto the dichroic mirror **132** in a direction **B** opposite that of direction **A** in which the plurality of light beams **126** pass directly through the dichroic mirror **132.** In direction **B,** the plurality of fluorescent emissions **142** are redirected by the dichroic mirror **132** to pass through a third lens **146** in which the plurality of fluorescent emissions **142** are then focused onto a pinhole array **148** to perform the pinholing operation **110.**

During the pinholing operation **110,** the pinhole array **148** physically blocks and rejects out-of-focus fluorescent emissions **142** and allows only in-focus fluorescent emissions **142A** to pass through the pinhole array **148.** In one embodiment, the pinhole array **148** may include a plurality of apertures configured to permit only in-focus fluorescent emissions **142A** to pass through the pinhole array **148,** while blocking any fluorescent emissions **142** that do not pass through one of the apertures.

After passing through the pinhole array **148,** the plurality of in-focus fluorescent emissions **142A** are scaled using the scaling operation **112** discussed above that locally contracts each of the focal points for a respective multi-focal pattern **128** by a predetermined factor, for example a factor of two, using a first micro-lens array **150** arranged in series with a second micro-lens array **152.** In one embodiment, the first micro-lens array **150** collimates the multi-focal pattern **128** of in-focus fluorescent emissions **142A,** while the second micro-lens array **152** receives the collimated in-focus fluorescent emissions **142A** and modifies the focal length for the collimated in-focus fluorescent emissions **142A** such that each foci are scaled down by a predetermined factor to achieve local contraction of the multi-focal pattern **128.** In some embodiments, the scaled in-focus fluorescent emissions **142B** caused by each multi-focal pattern **128** are then redirected by a first mirror **154** to pass through a fourth lens **158** for focusing the scaled in-focus fluorescent emissions **142B** onto a second mirror **156.** The second mirror **156** redirects the scaled in-focus fluorescent emissions **142B** to pass through an emission filter **160** that permits only scaled, in-focus fluorescent emissions **142B** with a particular wavelength range, for example **515** nm, to pass through the emission filter **160.** Once the scaled, in-focus fluorescent emissions **142B** are filtered, the scanning apparatus **134** rasters the fluorescent emissions **142B** onto the detector **164** through a fifth lens **162** such that the scaled, in-focus fluorescent emissions **142B** for each multi-focal pattern **128** are collected and the in-focus fluorescent emissions **142B** are summed by the detector **164** to produce a composite image **143.** The process of collecting the fluorescent emissions **142B** caused by multi-focal patterns **128** is repeated until the entire field of view has been illuminated and all the resulting fluorescent emissions **142B** are collected by the detector **164.**

In some embodiments, the detector **164** may be a camera with the shutter left open to exposure as the scaled, in-focus fluorescent emissions **142B** are rastered onto the detector **164** for collection until the entire field of view is illuminated and all the collected data is received.

In some embodiments, the composite image **143** is transmitted to a processing system **166** that performs the deconvolution operation **118** that performs a de-blurring function to enhance the resolution of each composite image **143.**

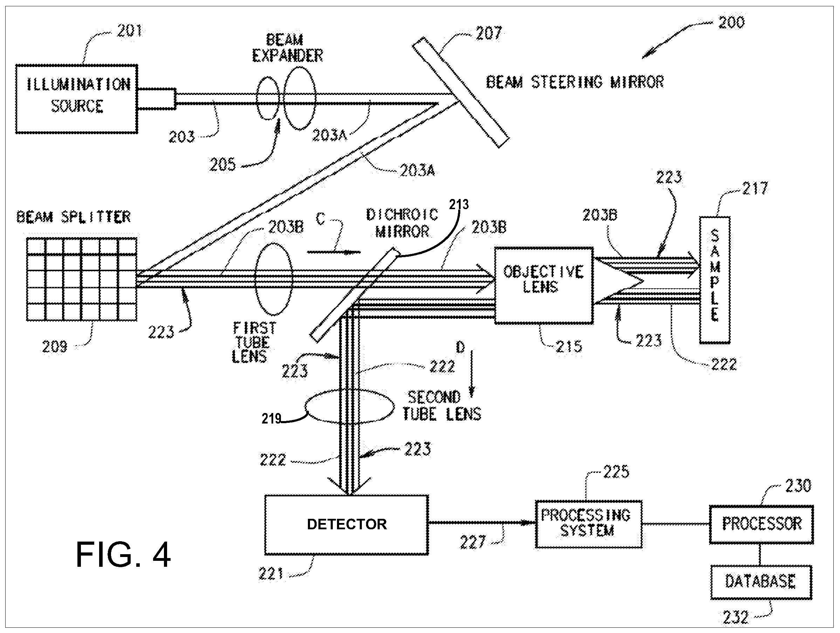

Referring to FIG. **4****,** one embodiment of the multi-focal SIM system **200** for generating a multi-focal pattern **223** may include an illumination source **201** that generates a single light beam **203** that is transmitted through a beam expander **205** that produces an expanded single light beam **203,** which is reflected off a beam steering mirror **207** for performing the scanning operation **204** that scans the expanded light beam **203** onto a beam splitter **209,** for example a commercially available digital micromirror device (DMD) or a swept field confocal unit. In some embodiments, the DMD generates and switches multi-focal patterns **223** with each focal point being an illuminated spot on the multi-focal pattern **223.** Each illumination spot is created by a single DMD mirror pixel being in the ON position such that a portion of the expanded light beam **203** is reflected off the single DMD mirror pixel. The beam splitter **209** performs the illumination pattern generation operation **202** that splits the expanded light beam **203** being scanned into a plurality of expanded light beams **203A** that collectively form a sequence of multi-focal patterns **223.** The plurality of expanded light beams **203A** for each multi-focal pattern **223** is passed through a first tube lens **211** to pass directly through a dichroic mirror **213** along a direction **C.**

After passing directly through the dichroic mirror **213** the expanded light beams **203A** are focused by an objective lens **215** onto a sample plane for performing sample illumination **206** of sample **217** and generate a plurality of fluorescence emissions **222** emitted by the sample **217.** In the collection operation **208,** the fluorescent emissions **222** are focused back through the objective lens **215** and onto the dichroic mirror **213** along direction **D** perpendicular to that of direction **C** such that the fluorescent emissions **222** for each multi-focal pattern **223** are redirected and pass through a second tube lens **219.** The second tube lens **219** focuses the fluorescent emissions **222** onto a detector **221,** thus collecting each multi-focal pattern **223** in the form of collected data **227** for transmission to a processing system **225** that rejects out-of-focus light and performs scaling and summing operation **210.** The process of collecting the fluorescent emissions **222** caused by each multi-focal pattern is repeated until the entire field of view has been illuminated. In some embodiments, the processing system **225** may include a processor **230** in operative communication with the detector **221** for processing collected data **227** stored in a database **232,** such as a computer-readable medium, by executing instructions a shall be discussed in greater detail below.

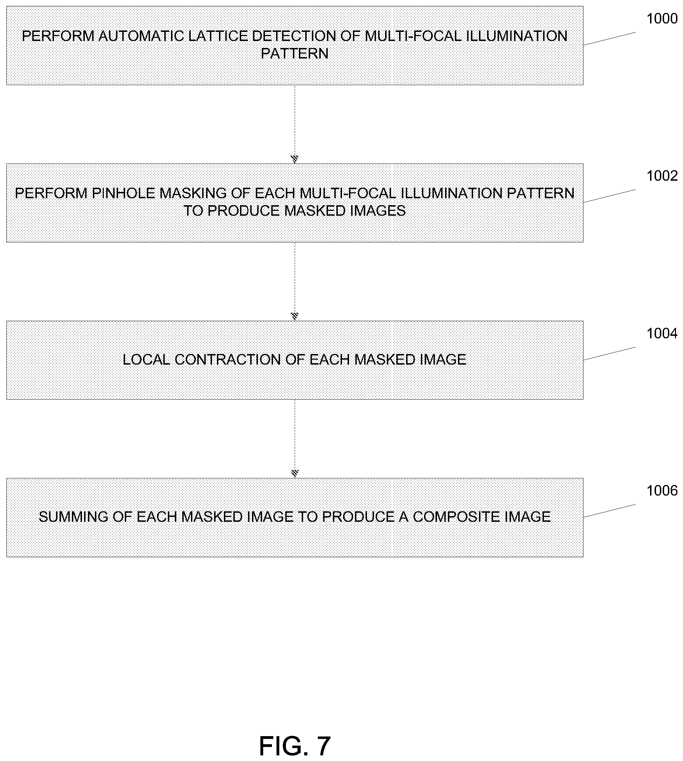

In one embodiment, the processing system **225** rejects out-of-focus fluorescent emissions **222,** and performs the scaling and summing operation **210** on the collected data **227** for each multi-focal pattern **223** using a computerized procedure for processing the collected data **227.** Referring to FIG. **7****,** a flow chart illustrates one method for performing the out-of-focus fluorescence rejection, scaling and summing operation **210** using the processing system **225.** At block **1000,** the processing system **225** performs an automatic lattice detection of the multi-focal illumination pattern **223.** Specifically, automatic lattice detection determines the position of each illumination focal point for a particular multi-focal pattern **223** in order to perform pinhole masking and local contraction of the various fluorescent foci. For example, the automatic lattice detection determines five vectors to completely specify the location of all focal points for each fluorescent emission **222** in a particular multi-focal pattern **223** in an image acquisition series. In some embodiments, the five vectors may be lattice vectors, shift vectors and an offset vector. Two lattice vectors specify the two-dimensional displacement between any two neighboring illumination spots (e.g., focal points). As such, any lattice point displaced by a lattice vector will fall on another lattice point. Due to thermal shift, the exact locations of each illumination spot may vary in time, so accurately extracting all vectors for each measured dataset from the collected data **227** provides the best results using the following methodology.

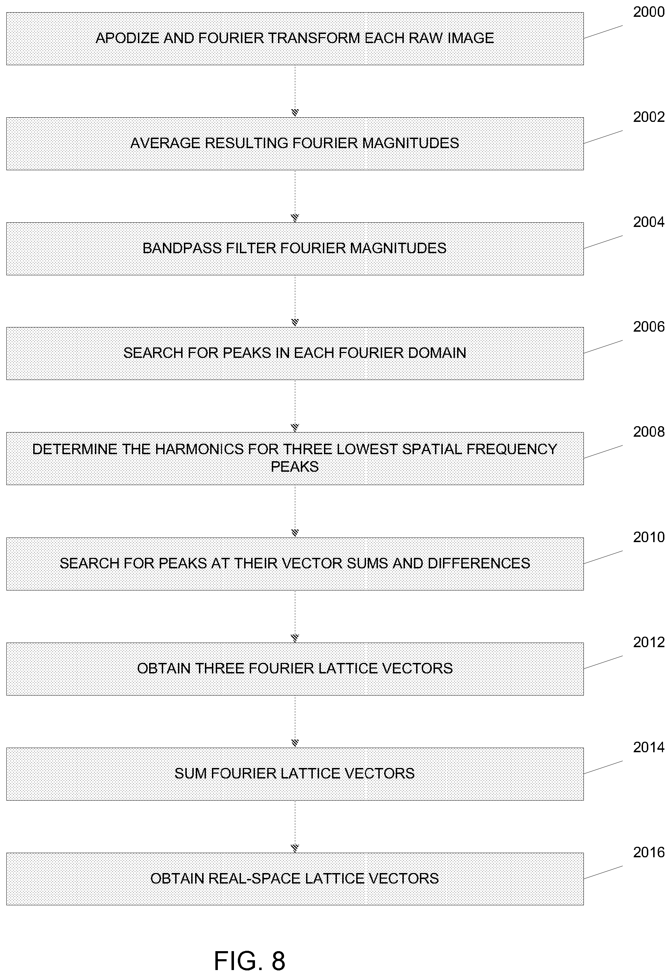

Referring to FIG. **8****,** a method for accurately extracting all vectors for each measured dataset of collected data **227** is shown when the processing system **225** performs the out-of-focus rejection, scaling and summing operation **210.** The offset vector specifies the absolute position of the illumination spot closest to the center of a multi-focal pattern in any one image acquisition series being processed by the processing system **225.** The shift vectors specify the distance of each illumination spot for a particular multi-focal pattern **223** moves between consecutive images. Since the multi-focal pattern **223** is rastered in a two-dimensional plane, a "fast" shift vector is applied at every step of the operation **210** and a "slow" shift vector is applied when a "fast" shift vector has completed illuminating one row. As used herein, the term "fast" shift vector specifies those lattice points in a single row and the term "slow" shift vector specifies successive rows. At block **2000,** each raw image representing the fluorescence **142B** captured from a particular multi-focal pattern **223** is multiplied by a Hann window (which prevents ringing in the Fourier domain) and Fourier transformed. At block **2002,** the resulting Fourier magnitudes are averaged to obtain a high signal-to-noise measurement of peak locations in the Fourier space. At block **2004,** the averaged resulting Fourier magnitudes are filtered through a bandpass filter. At block **2006,** a search for spikes or peaks in the Fourier domain is accomplished. Since the raw images for summed Fourier magnitudes are expected to be a periodic lattice of peaks, the dimensions of each periodic lattice is made by determining the local Fourier maxima, which are either lattice elements or noise. At block **2008,** the harmonics for the three lowest spatial frequency peaks are determined by computationally searching for peak intensities at and near the expected frequency multiples. At block **2010,** given the locations of the three lowest spatial frequency peaks with harmonics, a search is conducted for peaks at their vector sums and differences, which compose the lattice vectors. In the present method, the peaks in a periodic lattice predict the location of other peaks in the same lattice with every lattice point being located at the vector sum of an integer number of Fourier lattice vectors. At block **2012,** the processing system **225** solves the resulting system of equations by linear squares to obtain three lattice vectors. Any single peak in the Fourier domain will have some positional error due to noise or pixelization. Utilizing the method of least squares, the information provided by each peak produces a more accurate measurement of the lattice dimensions. At block **2014,** the processing system **225** sums the lattice vectors to determine an error vector and then subtracts one-third of the error vector from each Fourier lattice vector. At block **2016,** any two of the two Fourier lattice vectors are selected and transformed to obtain real space lattice vectors. It has been discovered that obtaining two lattice vectors for the multi-focal illumination pattern makes it substantially easier to measure the offset vector and the shift vector.

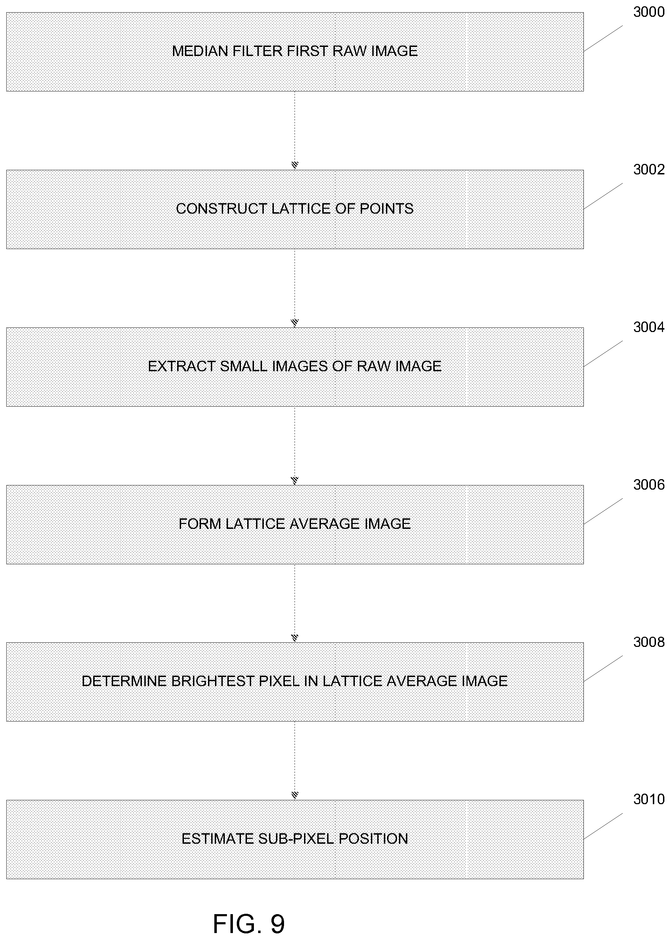

Referring to FIG. **9****,** a method for determining offset vectors is shown when the processing system **225** performs the rejection of out-of-focus blur, scaling and summing operation **210.** At block **3000,** a first raw image is median filtered. At block **3002,** a lattice of points from the measured lattice vectors is constructed with an offset vector of zero. At block **3004,** a set of smaller images centered at each lattice point is extracted from the median-filtered raw image using interpolation for sub-pixel centering. At block **3006,** the smaller images are averaged to form a "lattice average" image. At block **3008,** the brightest pixel in the lattice average image is determined. At block **3010,** the sub-pixel position of each intensity peak in the lattice average image is estimated using interpolation techniques.

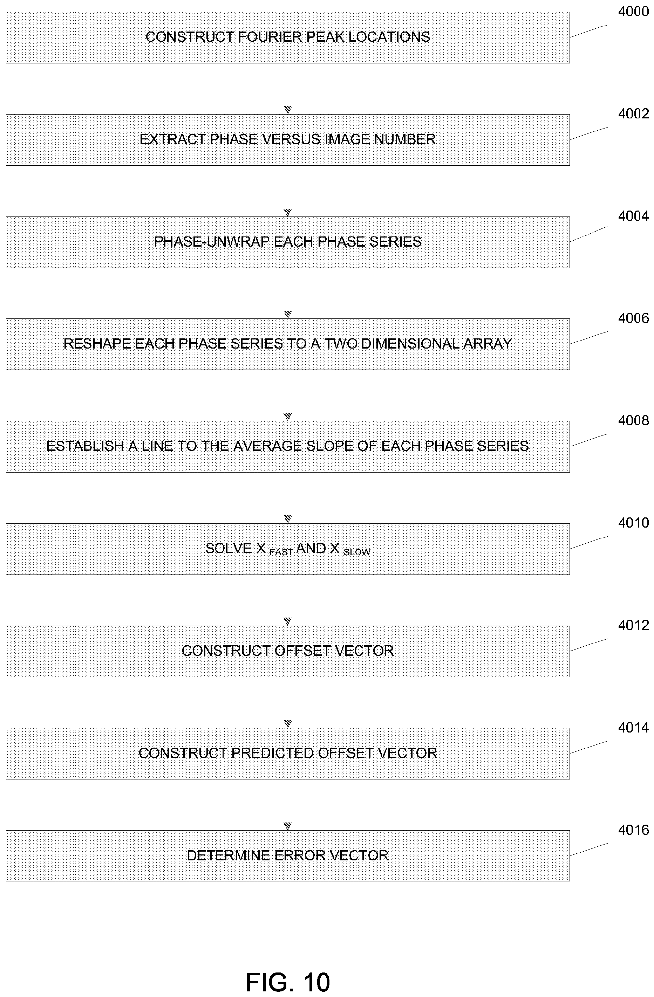

Referring to FIG. **10****,** a method for determining the shift vectors is shown when the processing system **225** performs the rejection of out-of-focus blur, scaling and summing operation **210.** At block **4000,** a set of expected Fourier peak locations is constructed from the measured Fourier lattice vectors. At block **4002,** extract phase is extracted for each image number for the transformed collected data **227.** At block **4004,** the processing system **525** phase-unwraps each series of multi-focal patterns **223** to remove **2π** jumps. It has been noted that the magnitude of the Fourier transform of each raw image is independent of shifts of the raw images. Information about shifting is encoded in the phase of the Fourier transforms. At block **4006,** the processing system **225** reshapes each phase series in two-dimensional series to a two-dimensional array with the same dimensions as the scan pattern (e.g., **16** pixels x **14** pixels). After reshaping of each phase series, at block **4008,** a line is fit to the average slope of each phase series in both the "fast" and "slow" directions. In each consecutive raw image that is detected, the illumination shifts by **X_{FAST}**. At the end of each row, the illumination also shifts by **X_{SLOW}**. If a raw image shifts by **X,** the phase of a peak in the Fourier space located at **k** shifts by **k * X.** At block **4010,** the processing system **225** solves the resulting system of equations for **X_{FAST}** and **X_{SLOW}.** At block **4012,** an offset vector is constructed for the first and last frames of the series of multi-focal patterns **223.** Computing the offset vector for the last frame, which uses the same process that computed the offset vector of the first frame, provides a strong constraint that greatly increases the accuracy of the estimate. At block **4014,** a predicted offset vector is constructed based on the current estimate for **X_{FAST}** and **X_{SLOW}**. Once the predicted offset vector is constructed, the difference between the two vectors is determined to be an error vector, which is divided by the number of raw images in the scan, and subtracted from **X_{SLOW}**.

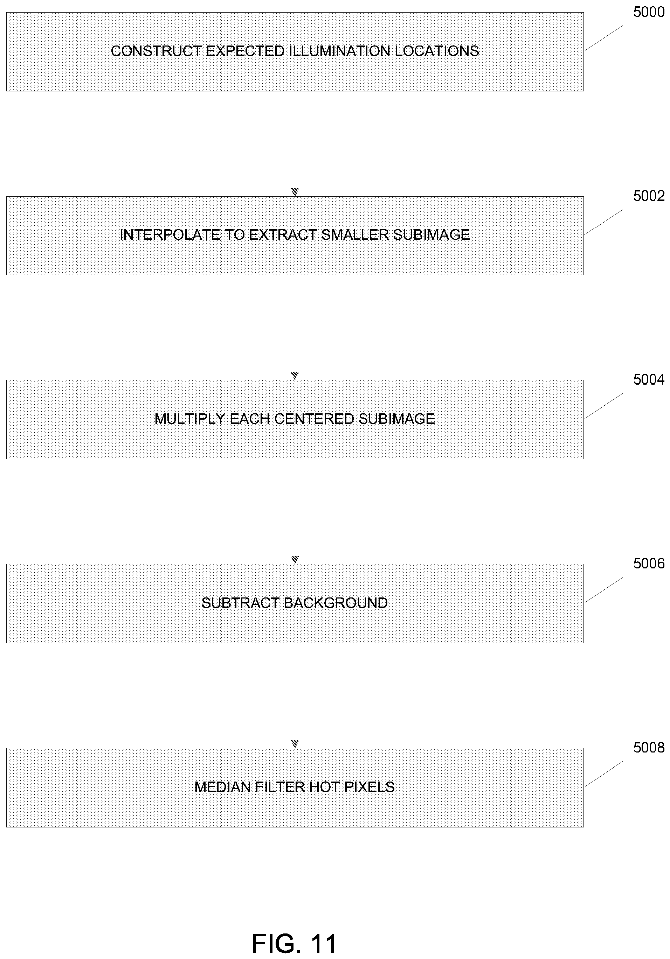

Referring to FIG. **11****,** a method for pinhole masking is shown for rejecting out-of-focus blur when the processing system **225** performs the out-of-focus blur, scaling and summing operation **210.** At block **5000,** a set of expected illumination locations based on the vectors determined above is constructed for each raw image collected during the collection operation **208.** At block **5002,** smaller subimages centered at each illumination location are extracted using interpolation techniques and then at block **5004** each centered subimage is multiplied by the processing system **525** by a two-dimensional Gaussian mask. These process steps simulate the effect of physical pinholes. At block **5006,** the background may be optionally subtracted from each subimage and the centered subimage multiplied by a correction factor given by calibration data. At block **5008,** individual hot pixels may be optionally median filtered by the processing system **525.**

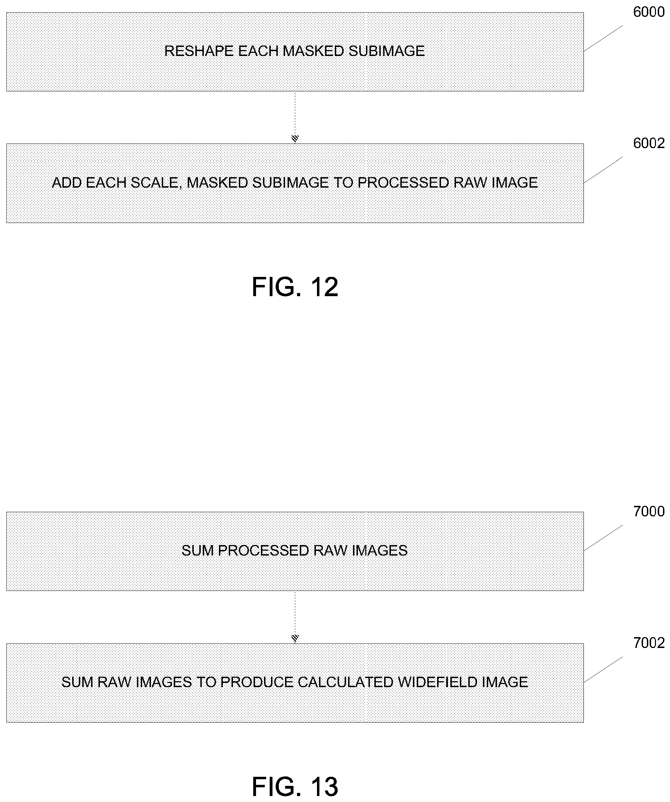

Referring to FIG. **12****,** a method for scaling and performing local contraction is shown when the processing system **225** performs the rejection of out-of-focus blur, scaling and summing operation **210.** At block **6000,** each masked subimage is re-sampled to shrink the masked subimage by a factor of about two. At block **6002,** each scaled, masked subimage is added to the processing raw image.

Referring to FIG. **13****,** a method for summing is shown when the processing system **225** performs the rejection of out-of-focus blur, scaling and summing operation **210.** At block **7000,** the processed raw images are summed to form a composite image. At block **7002,** the raw images may be optionally summed to produce a calculated "widefield" image.

The resulting composite image produced by the rejection of out-of-focus blur, scaling and summing operation **210** has been shown to have a **√2** better resolution than a typical widefield image produced by a conventional widefield microscopy. The rejection of out-of-focus blur, scaling and summing operation **210** also greatly improves optical sectioning, similar to a conventional spinning-disk or swept-field confocal microscope.

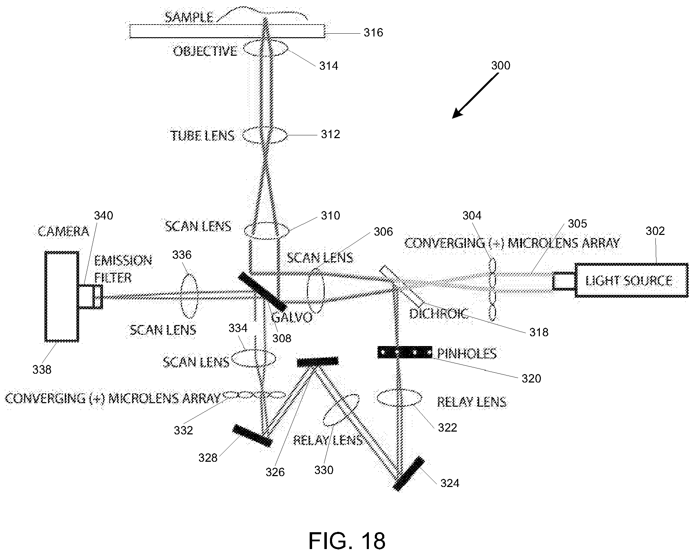

Referring to FIG. **18****,** an embodiment of the MSIM system of the present disclosure, designated **300,** is shown. MSIM system **300** may be a swept-field hardware arrangement in which a similar degree of resolution enhancement as discussed above for MSIM systems **100** and **200** is achieved. The major difference between MSIM system **300** and MSIM systems **100** and **200** is that the operations related to scaling, pinholing, and summing steps are achieved in MSIM system **300** using hardware rather than software as required for MSIM systems **100** and **200.** In this embodiment, MSIM system **300** includes a light source **302** that emits a light beam **305** which is transmitted through a converging (+) microlens array **304** and the resulting focused light beam relayed through a first scan lens **306,** scanned by a galvanometer mirror **308,** and then through a second scan lens **310** in which the first and second scan lenses **306** and **310** are in a 4f configuration to an intermediate image plane.

As further shown, the galvanometric mirror **308** may be positioned at the focal point between the first and second scan lenses **306** and **310** and sweeps the excitation foci across the sample plane **316,** thus producing a swept-field excitation that covers the imaging field. In addition, a telescope arrangement of a tube lens **312** and an objective lens **314** is positioned between second scan lens **310** and the sample plane **316** which demagnifies the intermediate stage and produces an array of excitation foci which is swept across the sample plane **316** by the galvanometric mirror **308.** The resulting fluorescence generated by the excitation foci being swept across the sample plane **316** follows the same pathway back through the objective lens **314** and tube lens **312,** which is descanned by the galvanometer mirror **308,** but diverted with a dichroic mirror **318** positioned between the converging microlens array **304** and the first scan lens **306.** Once diverted, the fluorescence emission is passed through a pinhole array **320,** thereby greatly reducing out-of-focus fluorescence emission.

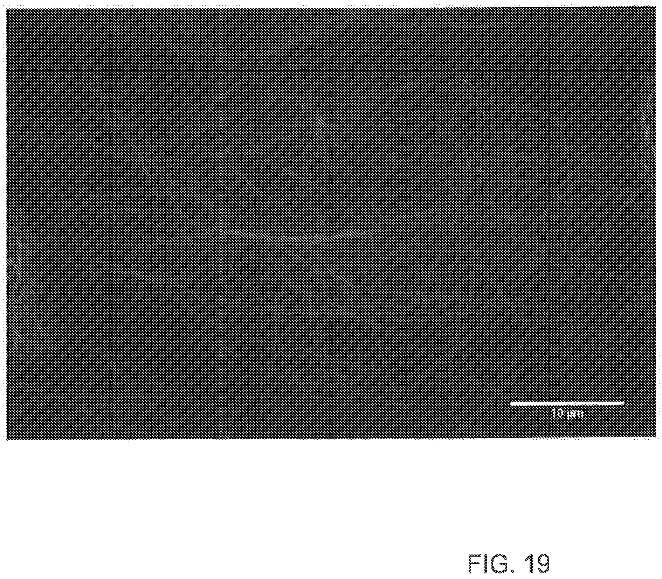

The resulting in-focus fluorescence emission is then relayed using a 4f telescope pair consisting of a first relay lens **322** which focuses the in-focus fluorescence emission onto a first mirror **324** that diverts the in-focus fluorescence emission through a second relay lens **330** which is then diverted by a second mirror **326** and a third mirror **328** in succession to a second converging (+) microlens array **332.** The second converging (+) microlens array **332** is positioned one focal length before the focus that would have been formed by the second relay lens **330,** thereby producing an erect (non-inverted) image of the fluorescence emission foci with one half the magnification. This erect image is then relayed through another telescope arrangement of a third scan lens **334** and fourth scan lens **336** arranged in a 4f configuration in which the erect image may be rescanned by the galvanometer mirror **308** positioned at the focal point between the third and fourth scan lens **334** and **336.** A camera **338** having an emission filter **340** captures the final image. The MSIM system **300** can produce enhanced resolution images such as shown in FIG. **19** which shows AlexaFluor 488 nm labeled microtubules in a fixed U2OS cell. The apparent width of each of the microtubules is about 200 nm. The image shown in FIG. **19** is raw without any post-processing deconvolution that would be expected to further increase the resolution of the image.

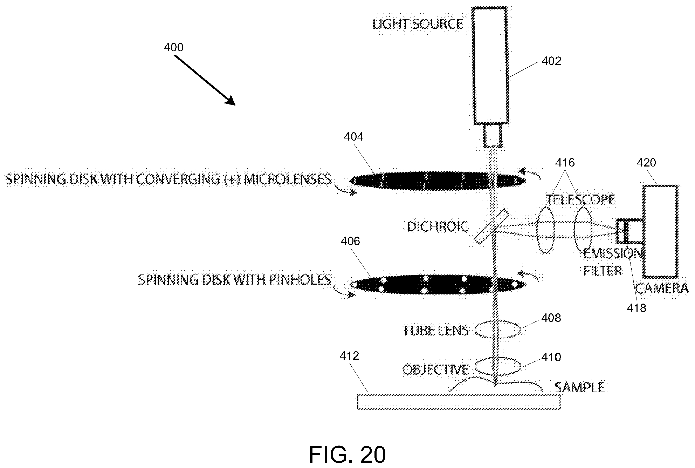

FIG. **20** falling outside of the present invention shows an example of a spinning disk confocal microscopy system, designated **400.** System **400** may include a light source **402** for generating light beams that are passed through a spinning disk with converging (+) microlens array **404** and then a spinning disk with a matched pinhole array **406.** The resulting excitation is then imaged onto the sample **412** with an optical arrangement of a tube lens **408** and objective lens **410.** In this arrangement, the spinning of both the spinning disk with converging (+) micolens array **404** and the spinning disk with matched pinhole array **406** is performed in tandem, so that excitation foci that are created cover the field of view of the sample **412.** Fluorescence emissions originating from the sample **412** are then passed back through the objective lens **410,** the tube lens **408** and the spinning disk with matched pinhole array **406.** The fluorescence emissions are then diverted with a dichroic mirror **414** such that the fluorescence emissions pass through a telescope arrangement **416** which are captured by a camera **420** through an emission filter **418.**

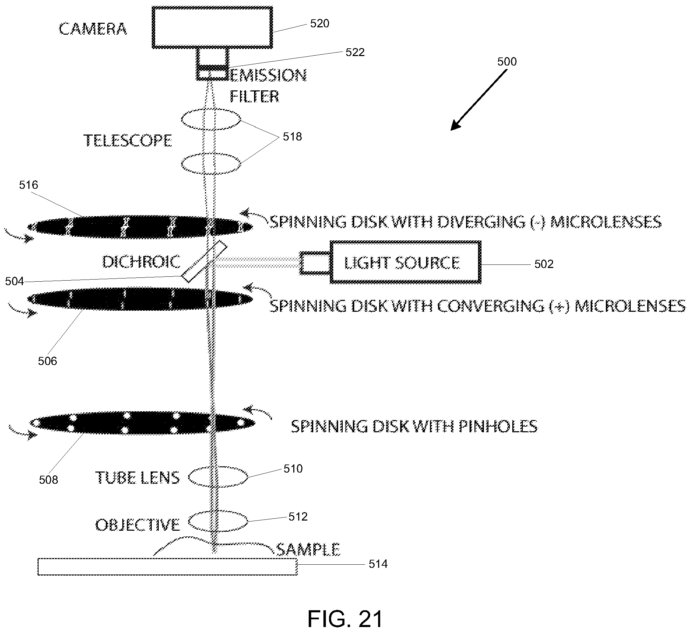

Referring to FIG. **21****,** also falling outside of the scope of the present invention, another embodiment of the MSIM system with a spinning disk multi-focal structured illumination microscopy which based on the modified spinning disk system **400** described in FIG. **20****,** designated **500,** is shown. In one embodiment, a conventional spinning disk confocal microscope is converted into a resolution doubling device with one major modification. MSIM system **500** may include a light source **502** that generates a light beam that is diverted by a dichroic mirror **504** which passes through a spinning disk with converging (+) microlens array **506** and then a spinning disk with a pinhole array **508** before being focused onto the sample **514** by a tube lens **510** and objective lens **512.** Once the sample **514** is illuminated, the fluorescence emissions generated by the sample **514** pass back through the objective lens **512** and tube lens **510** which focus the fluorescence emissions through a spinning disk with diverging (-) microlens array **516** positioned along the optic axis which is made to spin in sync with the spinning disk with converging (+) microlens array **506** and the spinning disk with pinhole array **508** before the fluorescence emissions pass through a telescope arrangement **518** before being captured by a camera **520** after being filtered by emission filter **522.** In one embodiment, the spinning disk with diverging (-) micolens array **516** should contain the same number of micolenses as the spinning disk with converging (+) microlens array **506** and that these microlenses should be spaced at the same spatial location on each spinning disk **506** and **516.** In some embodiments, if the microlenses for the spinning disk with diverging (-) microlens array **516** have a half focal length of the spinning disk with converging (+) microlens array **506,** and the spinning disks **506** and **516** are spaced apart by the difference of the focal lengths, this arrangement will form a Galilean telescope with a magnification of ½. If such a telescope is positioned at the appropriate distance from the erect, demagnfied images are so created, the rotation of the spinning disks **516** and **506** in synchrony with the camera exposure performs the desired pinholing, scaling, and summing operations required for resolution-doubling. One important advantage of the spinning disk arrangement of the MSIM system **500** is the significantly reduced number of emission optics, nine instead of seventeen. Another advantage is that if the spinning disk with diverging (-) microlenses array **516** can be readily fabricated, the optical set up for the MSIM system **300, 400** and **500** is likely much easier to align than a conventional swept-field microscope, making the translation of the MSIM technology to spinning disk readily available.

### Testing

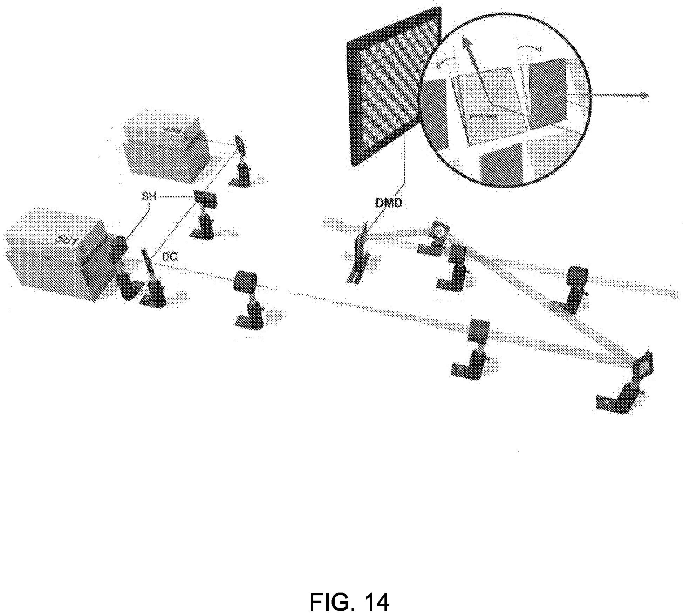

To investigate the potential of the multi-focal SIM system **200** for biological imaging, antibody-labeled microtubues in human osteosarcoma (U2OS) cells embedded in fluoromount were imaged. The following is a description of the illumination system (FIG. **14****),** microscope system, sample preparation, and data processing of captured images. The use of multi-focal patterns in combination with deconvolution allowed us to investigate a variety of samples at imaging rates of **1** Hz, at resolutions down to **145** nm laterally and **400** nm axially. Compared to conventional structured illumination microscopy systems, the multi-focal SIM system **200** provided three-dimensional images of samples **5-8** times thicker than conventional structured illumination microscopy systems. In the present investigation, microtubules were imaged in live transgenic zebrafish embryos at depths grater than **45** µm from the coverslip surface. In addition, four-dimensional SIM datasets of GFP-labeled histones in live nematode embryos were obtained.

For testing, a periodic lattice of approximately equilateral triangles for our illumination point locations because this particular pattern maximized the distance between any two nearest neighbors for a given density of points, thereby minimizing crosstalk. The multi-focal illumination pattern was translated one Digital Micromirror Device (DMD) pixel at a time, which corresponded to a step size of **120** nm in the sample plane. Larger steps did not evenly illuminate the sample, giving a visible striping artifact, while smaller steps increased acquisition time and dose with no increase in image quality.

Multi-focal patterns were imaged onto the sample, which was mounted on a commercial inverted microscope, and a scientific-grade complementary metal-oxide-semiconductor camera (sCMOS) was used to record one raw image for each multi-focal pattern position. By varying the spacing between the illumination points, acquisition speed may be traded for sectioning quality. It was discovered that widely spaced foci had less crosstalk, but additional multi-focal illumination patterns were required to evenly illuminate a sample. In contrast, denser foci had more crosstalk, but required correspondingly fewer multi-focal patterns to evenly illuminate the sample. It was found that a multi-focal pattern with a **16** pixel horizontal and a **14** pixel vertical separation between scan points provided good results in the biological samples investigated. The resulting **224** raw exposures taken at **222** Hz for a **480** pixel x **480** pixel field of view corresponded to about a **1** Hz super-resolution image acquisition rate.

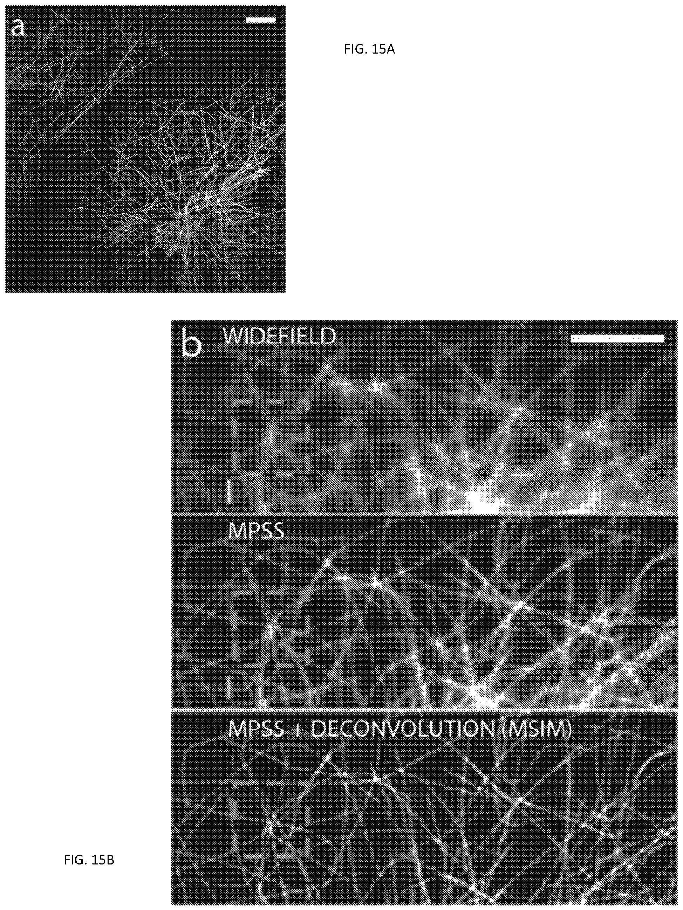

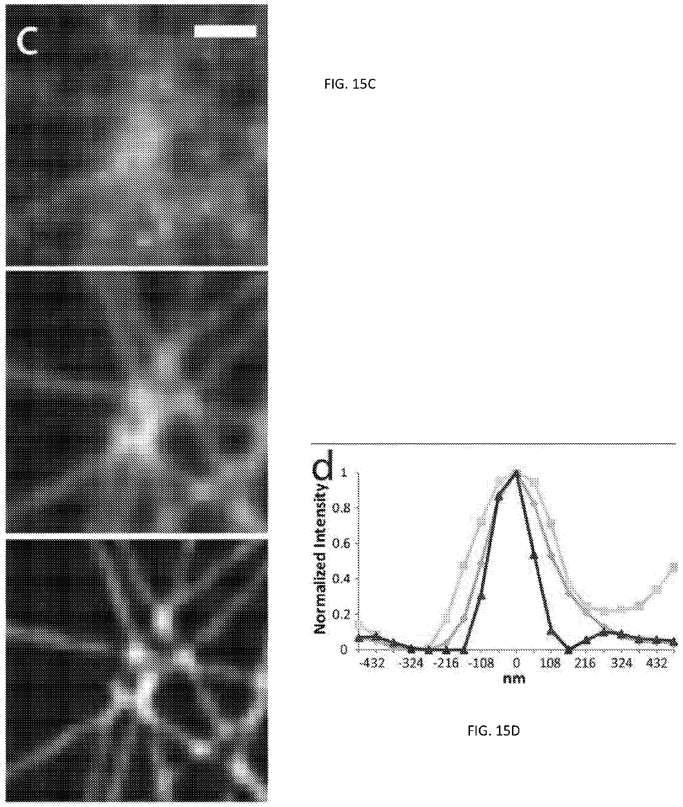

To investigate the potiential of multi-focal SIM system **200** for biological imaging, we imaged antibody-labeled microtubules in human osteosarcoma (U2OS) cells embedded in fluoromount as shown in the images illustrated in FIG. **15****.** Compared to widefield images, the multi-focal illuminated, pinholed, summed, and scaled images produced by the SIM system **200** improved image resolution including image contrast. In addition, parallel, iterative deconvolution further improved the resulting composite image, which revealed features previously obscured by diffraction. The apparent full-width at half maximum (FWHM) intensity of microtubules in multi-focal SIM system **200** images was **145** nm, which was a two-fold improvement compared to widefield imaging. Similar experiments on **110** nm subdiffractive beads confirmed this result (multi-focal SIM system **200** FWHM **146** +/- **15** nm vs. widefield FWHM **284** +/- **32** nm, N = **80** beads. The total acquisition time for the **48** µm x **49** µm field was about **1** s, a **6500**-fold improvement over a conventional image scanning microscopy (ISM) system assuming the same **222** Hz raw frame rate for each microscopy system.

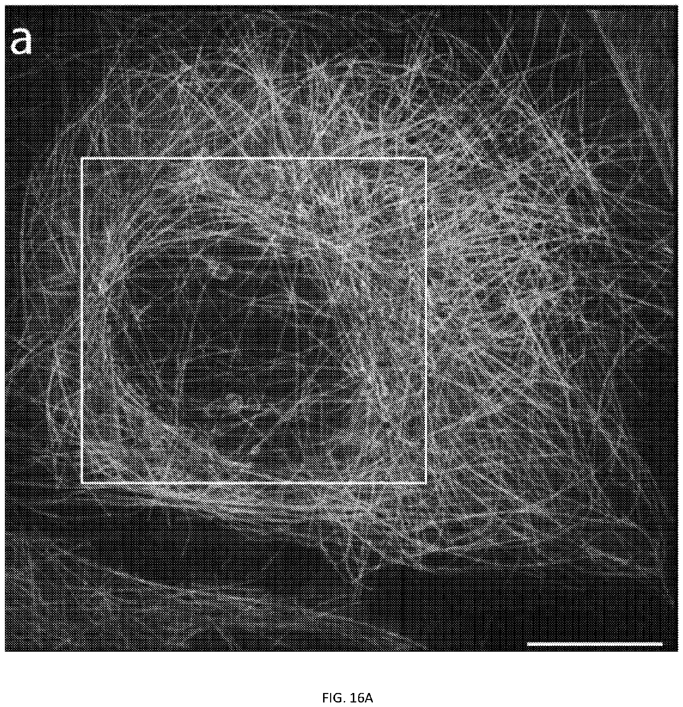

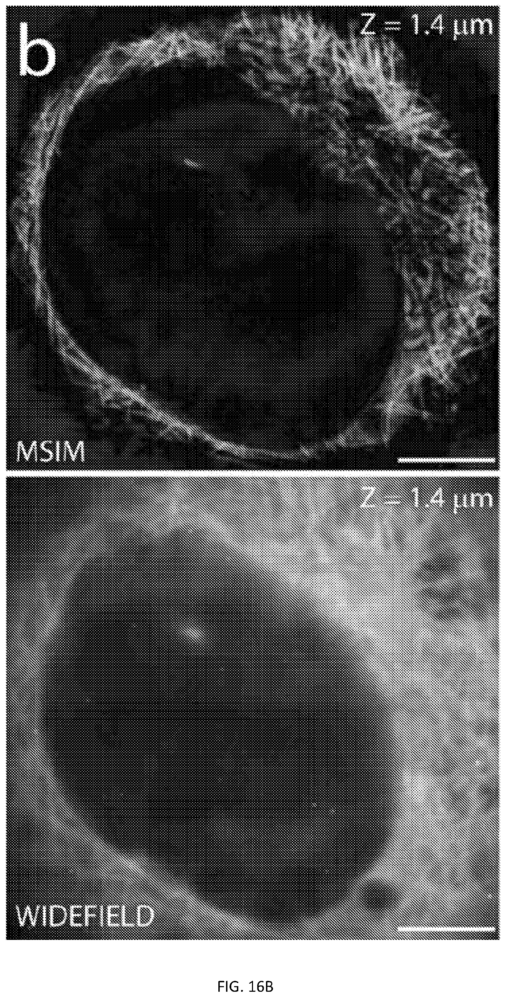

The suitability of the multi-focal SIM system **200** for dual-labeled, three-dimensional samples was also investigated as shown in the samples illustrated in FIG. **16****.** A Z stack of images on a fixed cell embedded in fluoromount was used. Immuno-labeled microtubules with Alexa Fluor 488 and stained mitochondria with Mitotracker Red obtained a volume of **3.7** µm thickness, with individual slices separated by **100** nm. Compared to widefield images obtained with the same total illumination dose, three-dimensional multi-focal SIM system **200** images provided a striking increase in image contrast, due to the combined physical (via digital pinholes) and computational (via three-dimensional deconvolution) removal of out-of-focus light.

The resulting composite images produced by the multi-focal SIM system **200** had approximately a two-fold resolution improvement over widefield imaging; better resolving microtubules and "worm-like" mitochondria. For example, better resolving of sub-diffractive voids at the ends of individual mitochondria was achieved including microtubule pairs separated by greater than 200 nm. Unexpectedly, multi-focal SIM system 200 also improved the axial resolution approximately two-times over widefield images, as microtutubles had apparent axial FWHM of about **400** nm. This result was confirmed on **100** nm subdiffractive beads (Multi-focal SIM system FWHM **402** +/- **49** nm; widefield **826** +/- **83** nm, N = **80** beads.

The MSIM system **200** was also applied to three-dimensional imaging of thicker live samples in which the pinhole operation physically rejects out-of-focus light that would otherwise swamp the in-focus light signal. To demonstrate this capability, live, immobilized zebrafish embryos expressing a GFP transgene that labeled microtubules were imaged.

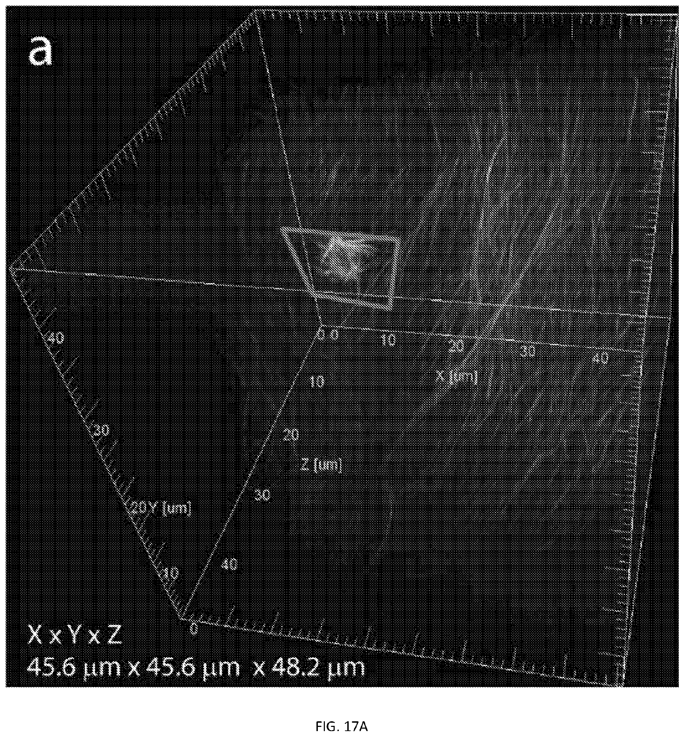

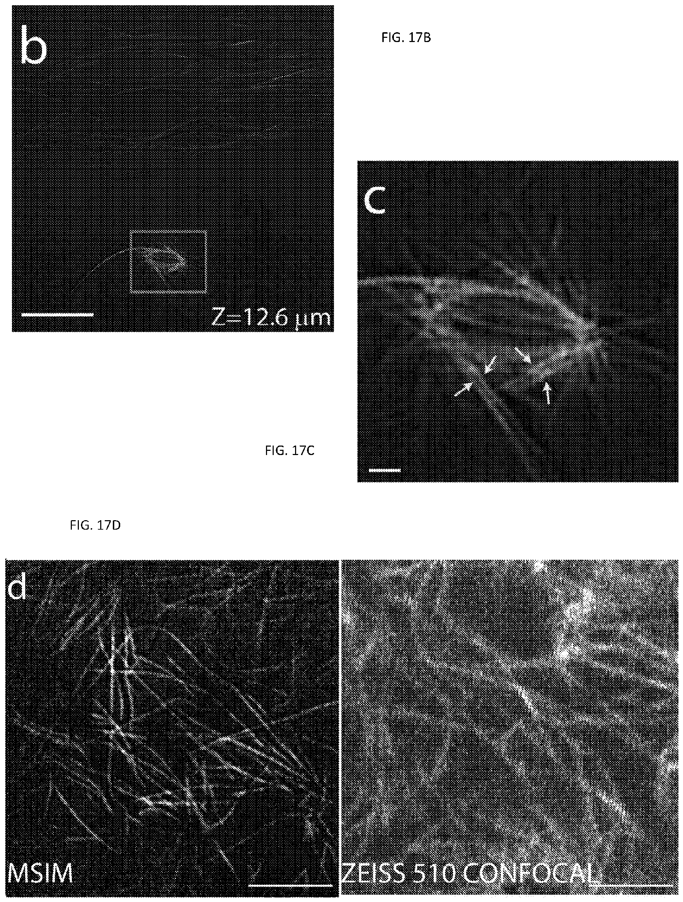

Using multi-focal illumination in accordance with the multi-focal SIM system **200, 241** slices were acquired spaced **0.2** µm apart at a two-dimensional imaging rate of **1** Hz. After pinhole focusing, scaling, and three-dimensional deconvolution, a volume of **48.2** µm thickness was achieved as shown in the images of the sample illustrated in FIG. **17****.** Structural features such as the boundary between two adjacent somites, alignment of microtubules along the somite boundary, and microtubule free-regions corresponding to the nuclei of the developing muscle cells are clearly visible in the stack. Estimation of the z-position of successively deeper nuclei within this stack suggests that the imaging volume contained **6-7** cell layers.

In one test, the imaging rate of the multi-focal SIM system **200** captured a dividing cell in the epidermis without significant motion blur in the images. The resolution enhancement of multi-focal SIM system **200** was retained throughout the volume, as the separation between microtubule pairs at the site of the cell division was resolved to better than **200** nm, and microtubules in the epidermis had lateral FWHM **175** +/- **33** nm laterally (N = **30**) and **496** +/- **65** nm axially (N = **2**1).

### Illumination System

In the illumination system, all optics were mounted on an optical table (Kinetic Systems, Vibraplane Model #5704-3660-23SPL) to minimize mechanical vibrations. For exciting fluorescence, two lasers were used: a **150** mW, **561** nm laser (561, Coherent, Sapphire 561-150 CW CDRH) and a **200** mW, **488** nm laser (488, Coherent, Sapphire 488-200 CDRH). Mechanical shutters (Thorlabs, SH05 and SC10) placed after each laser was used to control illumination. Beams were combined with a dichroic mirror (DC, Chroma, 525dcxru) and expanded **6.7** times with a beam expander constructed from two achromatic lenses (Edmund, f = **30** mm, NT49-352-INK and Thorlabs, f = **200** mm, AC254-200-A-ML0. Expanded beams were directed onto a digital micromirror device (DMD, Digital Light Innovations, D4100 DLP 0.55" XGA) **24** degrees off normal, so that in the ON position the micromirrors tilted the output beam normal to the DMD face. The center order of the resulting illumination pattern was demagnified **1.5** times with a beam de-expander (Thorlabs, f = **75** mm, AC254-075-A-ML and f = **50** mm, AC254-050-A-ML0, aligned in a **4f** configuration such that the DMD face was re-imaged at the back focal plane of a **180** mm tube lens internal to the microscope (Olympus, IX-81). These elements are shown in FIG. **14****.** After entering the left side port of the microscope, the beam sequentially passed through (i) the tube lens; (ii) a dichroic mirror (Chroma, zt405/488/561); (iii) a **60x** objective (Olympus, PlanApo, NA **1.45** TIRF, for single cells, or UPLSAPO 60XS, NA **1.3,** for zebrafish and worm embryos) for a total demagnification of **90x** between the DMD and the sample being illuminated. The illumination at the sample covered a circular region approximately **50** µm in diameter.

### Microscope System

Structured illumination microscopy (SIM) imaging was performed on an Olympus IX81 inverted microscope equipped with both left and right side ports, and an automated XY stage with an additional Z piezoelectric stage **(200** µm range, Applied Scientific Instrumentation, PZ-2000). The patterned excitation (e.g. multi-focal illumination pattern) created by the DMD was brought in via the left side port to the microscope. Fluorescence emitted by the illuminated sample was collected by the objective, reflected with a dichroic mirror (Chroma, zt405/488/561), passed through a **180** nm tube lens internal to the microscope, filtered appropriately to reject pump light (Semrock, LP02-488RE-25 and NF03-561E-25), and detected with a scientific-grade complementary metal-oxide-semiconductor (sCMOS) camera (Cooke, pco.edge) mounted on the right side port. Correctly aligning the sCMOS along the optical axis was critical in achieving near diffraction-limited performance. To aid in the correct positioning of the camera, a 60x objectives typically used in imaging with a **10x** air objective (Olympus, CPlanFl 10x, 0.3NA), an optic much more sensitive to errors in axial alignment. A fixed illumination pattern (similar to one used in SIM) onto the fluorescent lake sample, and translated the camera along the optical axis until the apparent size of each illumination spot was minimized.

### Sample Preparation

U2OS cells were cultured on ethanol sterilized, cleaned #1.5 **25** mm diameter coverslips (Warner Instruments, 64-0715) in standard growth media (DMEM-HG (Invitrogen, 11960), sodium pyruvate (Invitrogen, 11360), GlutaMAX (Invitrogen, 35050) and **10**% heat inactivated fetal bovine serum (Invitrogen, 11082)). To stain the samples for microtubules, cells were fixed in with a mixture of **0.5**% glutaraldeyde, **0.37**% formaldehyde, and **0.3**% Triton X-100 in Cytosketetal Buffer (CB, 10 mM MOPS, 138 mM KCI, 2mM MgCl₂, 2mM EGTA, **0**.**01**% NaN₃, and **160** mM Sucrose, pH **6.1**). After fixation, the cells were washed in CB, quenched with 100 nm glycine, washed in CB, and blicked in antibody dilution buffer (AbDil, 150 mM NaCl, **20** nM Tris, 0.**1**% Triton X-100, 0.**1**% NaN₃, and **2**% bovine serum albumin, pH **7.4**). The primary monoclonal antibody (Invitrogen, 32-2500) was incubated with the cells diluted to **2** µg/mL in AbDil for one hour at room temperature. Following primary antibody incubation, the cells were washed in the phosphor-buffered saline before incubating the cells with the secondary, Alexa Fluor 488 labeled antibody (Invitrogen, A-11001) at **1:200** dilution in AbDil for **1** hour.

Samples for dual-color experiments were initially stained with Mitotracker Red (Invitrogen, M-7512) as per the manufacturer's instruction prior to fixation. After mitochondrial labeling, the procedure outline above was used to stain the microtubules. All samples were mounted in fluoromount G (Electron Microscopy Solutionis, 17984-25) to a standard **25** mm x **75** mm glass slide (SPI supplieds, #01251-AB) and sealed with nail polish.

### a) Subdiffractive Beads

Yellow-green or red fluorescent beads (Invitrogen, F8803, **110** nm diameter; Invitrogen F8801, 100 nm diameter) were used for all point spread function (PSF) measurements. Beads were diluted from the stock concentration of **1:1300 (1:200** in distilled water and **1:13** in ethanol) and spread over cleaned glass coverslips. After air-drying for **5** minutes to evaporate the ethanol, coverslips were washed twice in distilled water to remove unattached beads. After air-drying again, the beads were mounted in fluoromount or silicone oil onto glass slides, and sealed with nail polish.

### b) Zebrafish Samples

Tg(XIEef1a1:dclk2-GFP)^{io008} embryos carrying the zebrafish dclk2-GFP transgene were used in thick MSIM experiments shown in FIG. **16****.** To construct, this line, plasmids containing the transgene were injected into one-cell zebrafish embryos along with Tol2 mRNA. Fluorescent embryos were raised to adulthood and crossed to select for germline transmission by screening the offspring for GFP expression.

Tg(XIEdf1a1:dclk2-GFP)^{io0008} embryos were collected by natural spawning and maintained at **28** degrees Centigrade. Prior to imaging by the multi-focal SIM system **200,** embryos at **24** hpf were anesthetized in Tricaine (Sigma, E105210 at a final concentration of **600** µM in embryo media (**60** mg Instant ocean sea salt (Petsmart) per liter ddH₂O). Anesthetized embryos were mounted on round coverslips, immobilized in **1**% low-melt agarose (Cambrex, 50080), placed in a round coverslip holder (ASI, I-3033-25D), covered with embryo media, and imaged at room temperature.

### Data Processing

Following acquisition of raw images using the illumination and microscope system described above, each set of collected raw images of the samples were processed into a super-resolution image using the processing system **225** having software written in the Python programming language. The processing steps employed by the processing system **225** were: (i) Automatic lattice detection to precisely determine the respective locations of the illumination spots; (ii) Digital pinhole masking around each detected illumination spot to reject out-of-focus light, and optical flat-fielding using calibration data; (iii) Local contraction (e.g., scaling), and re-sampling the area around each illumination spot to improve the resolution by √2; (iv) Summing the processed raw images to produce a super-resolution composite image; and (v) Using conventional deconvolution techniques to recover the full 2x resolution enhancement. These process steps are discussed in greater detail above with respect to the focusing, scaling, and summing operation **210** executed by the processing system **225** of the multi-focal SIM system **200.**

It should be understood from the foregoing that, while particular embodiments have been illustrated and described, various modifications can be made thereto without departing from the scope of the invention as will be apparent to those skilled in the art. Such changes and modifications are within the scope and teachings of this invention as defined in the claims appended hereto.

## Claims

1. A microscopy system (300) comprising:
a light source (302) for transmitting a single light beam (305);
a first microlens array (304) for splitting the single light beam (305) into a plurality of light beams for forming at least one multi-focal pattern;
a scanner (308) for scanning the plurality of light beams that forms the at least one multi-focal pattern onto a sample such that the sample generates a plurality of fluorescent emissions with each of the at least one multi-focal pattern;
a pinhole array (320) to block out-of-focus fluorescent emissions for each of the at least one multi-focal pattern and allowing through in-focus fluorescent emissions to pass through the pinhole array (320);
a 4f telescope pair consisting of a first relay lens (322) which focuses the in-focus fluorescence emission onto a first mirror (324) that diverts the in-focus fluorescence emission through a second relay lens (330) which is then diverted by a second mirror (326) and a third mirror (328) in succession,
a second microlens array (332) for receiving the light beam from the third mirror, the second microlens array (332) being positioned one focal length before the focus that would have been formed by the second relay lens (330) thereby producing a non-inverted image of the in-focus fluorescent emissions having a one half magnification, wherein the non-inverted image is relayed through another telescope arrangement of a third scan lens (334) and fourth scan lens (336), wherein the scanner (308) rescans the non-inverted image of the in-focus fluorescent emissions; and
a camera (338) for capturing the scanned non-inverted image.

2. The microscopy system (300) of claim 1, further comprising:
a first and second scan lenses (306, 310) for focusing the plurality of light beams from the first microlens array (304) to an intermediate stage plane.

3. The microscopy system (300) of claim 2, wherein the first scan lens (306) and second scan lens (310) are in 4f configuration to the intermediate stage plane.

4. The microscopy system (300) of claim 2, further comprising:
an objective lens (314) and tube lens arrangement (312) positioned between the scanner (308) and the sample for demagnifying the intermediate image plane of the plurality of light beams and producing an array of excitation foci from the plurality of light beams for each of the at least one multi-focal pattern across the sample.

5. The microscopy system (300) of claim 1, wherein the scanner (308) comprises a galvanometric mirror.

6. The microscopy system (300) of claim 1, wherein the scanner (308) is positioned at the focal point between a first scan lens (306) and a second scan lens (310), wherein the first scan lens (306) is positioned between the first microlens array (304) and the scanner (308) while the second scan lens (310) is positioned between the scanner (308) and the sample.

7. The microscopy system (300) of claim 1, wherein the first microlens array (304) and the second microlens array (332) are converging microlenses.

8. The microscopy system (300) of claim 1, wherein:
the third scan lens (334) is positioned between the second microlens array (332) and the scanner (308) and the fourth scan lens (336) is positioned between the scanner (308) and the camera (338).

9. The microscopy system (300) of claim 1, further comprising:
a dichroic mirror (318) positioned between the second scan lens 310 and the sample plane (316).

## Patentansprüche

1. Mikroskopiesystem (300), umfassend:
eine Lichtquelle (302) zum Übertragen eines einzelnen Lichtstrahls (305);
eine erste Mikrolinsenanordnung (304) zum Aufteilen des einzelnen Lichtstrahls (305) in eine Vielzahl von Lichtstrahlen zum Bilden mindestens eines multifokalen Musters;
eine Abtasteinheit (308) zum Abtasten der Vielzahl von Lichtstrahlen, die das mindestens eine multifokale Muster auf einer Probe bildet, sodass die Probe eine Vielzahl von Fluoreszenzemissionen mit jedem des mindestens einen multifokalen Musters erzeugt;
eine Lochblendenanordnung (320) zum Blockieren von unscharfen Fluoreszenzemissionen für jedes des mindestens einen multifokalen Musters und Ermöglichen, dass fokussierte Fluoreszenzemissionen durch die Lochblendenanordnung (320) gelangen;
ein 4f-Teleskoppaar, das aus einer ersten Relaislinse (322) besteht, die die fokussierte Fluoreszenzemission auf einen ersten Spiegel (324) fokussiert, der die fokussierte Fluoreszenzemissionen durch eine zweite Relaislinse (330) umlenkt, die dann von einem zweiten Spiegel (326) und einem dritten Spiegel (328) nacheinander umgelenkt wird,
eine zweite Mikrolinsenanordnung (332) zum Empfangen des Lichtstrahls von dem dritten Spiegel, wobei die zweite Mikrolinsenanordnung (332) eine Brennweite vor dem Fokus, der von der zweiten Relaislinse (330) gebildet worden wäre, positioniert ist, wodurch ein nicht invertiertes Bild der fokussierten Fluoreszenzemissionen mit halber Vergrößerung erzeugt wird, wobei das nicht invertierte Bild durch eine andere Teleskopanordnung einer dritten Abtastlinse (334) und einer vierten Abtastlinse (336) geleitet wird, wobei die Abtasteinheit (308) das nicht invertierte Bild der fokussierten Fluoreszenzemissionen erneut abtastet; und
eine Kamera (338) zum Aufnehmen des abgetasteten nicht invertierten Bildes.

2. Mikroskopiesystem (300) nach Anspruch 1, ferner umfassend: eine erste und eine zweite Abtastlinse (306, 310) zum Fokussieren der Vielzahl von Lichtstrahlen von der ersten Mikrolinsenanordnung (304) auf eine Zwischenstufenebene.

3. Mikroskopiesystem (300) nach Anspruch 2, wobei die erste Abtastlinse (306) und die zweite Abtastlinse (310) in 4f-Konfiguration zu der Zwischenstufenebene sind.

4. Mikroskopiesystem (300) nach Anspruch 2, ferner umfassend: eine Objektivlinse (314) und eine Tubuslinsenanordnung (312), die zwischen der Abtasteinheit (308) und der Probe positioniert sind, um die Zwischenstufenebene der Vielzahl von Lichtstrahlen zu verkleinern und eine Anordnung von Anregungsfokussen von der Vielzahl von Lichtstrahlen für jedes des mindestens einen multifokalen Musters über die Probe hinweg zu erzeugen.

5. Mikroskopiesystem (300) nach Anspruch 1, wobei die Abtasteinheit (308) einen Galvanometerspiegel umfasst.

6. Mikroskopiesystem (300) nach Anspruch 1, wobei die Abtasteinheit (308) an dem Brennpunkt zwischen einer ersten Abtastlinse (306) und einer zweiten Abtastlinse (310) positioniert ist, wobei die erste Abtastlinse (306) zwischen der ersten Mikrolinsenanordnung (304) und der Abtasteinheit (308) positioniert ist, während die zweite Abtastlinse (310) zwischen der Abtasteinheit (308) und der Probe positioniert ist.

7. Mikroskopiesystem (300) nach Anspruch 1, wobei die erste Mikrolinsenanordnung (304) und die zweite Mikrolinsenanordnung (332) konvergierende Mikrolinsen sind.

8. Mikroskopiesystem (300) nach Anspruch 1, wobei:
die dritte Abtastlinse (334) zwischen der zweiten Mikrolinsenanordnung (332) und der Abtasteinheit (308) positioniert ist und die vierte Abtastlinse (336) zwischen der Abtasteinheit (308) und der Kamera (338) positioniert ist.

9. Mikroskopiesystem (300) nach Anspruch 1, ferner umfassend: einen dichroitischen Spiegel (318), der zwischen der zweiten Abtastlinse 310 und der Probenebene (316) positioniert ist.

## Revendications

1. Système de microscopie (300) comprenant :
une source lumineuse (302) pour transmettre un faisceau lumineux unique (305) ;
un premier réseau de microlentilles (304) pour diviser le faisceau lumineux unique (305) en une pluralité de faisceaux lumineux pour former au moins un motif multifocal ;
un scanner (308) pour balayer la pluralité de faisceaux lumineux qui forment l'au moins un motif multifocal sur un échantillon de telle sorte que l'échantillon génère une pluralité d'émissions fluorescentes avec chacun de l'au moins un motif multifocal ;
un réseau de sténopés (320) pour bloquer des émissions fluorescentes non focalisées pour chacun de l'au moins un motif multifocal et permettant à des émissions fluorescentes focalisées de passer à travers le réseau de sténopés (320) ;
une paire de télescopes 4f constituée d'une première lentille relais (322) focalisant l'émission de fluorescence focalisée sur un premier miroir (324) qui dévie l'émission de fluorescence focalisée à travers une deuxième lentille relais (330), qui est ensuite déviée successivement par un deuxième miroir (326) puis un troisième miroir (328),
un deuxième réseau de microlentilles (332) pour recevoir le faisceau lumineux du troisième miroir, le deuxième réseau de microlentilles (332) étant positionné à une distance focale avant le foyer formé par la deuxième lentille relais (330), produisant ainsi une image non inversée des émissions fluorescentes focalisées avec un grossissement de moitié, l'image non inversée étant relayée par un autre ensemble de télescopes composé d'une troisième lentille de balayage (334) et d'une quatrième lentille de balayage (336), le scanner (308) rebalayant l'image non inversée des émissions fluorescentes focalisées.
une caméra (338) pour capturer l'image balayée non inversée.

2. Système de microscopie (300) selon la revendication 1, comprenant en outre :
une première et une deuxième lentilles de balayage (306, 310) pour focaliser la pluralité de faisceaux lumineux provenant du premier réseau de microlentilles (304) vers un plan d'étage intermédiaire.

3. Système de microscopie (300) selon la revendication 2, dans lequel la première lentille de balayage (306) et la deuxième lentille de balayage (310) sont dans une configuration 4f par rapport au plan de l'étage intermédiaire.

4. Système de microscopie (300) selon la revendication 2, comprenant en outre :
un ensemble de lentilles d'objectif (314) et de lentilles tubulaires (312) positionné entre le scanner (308) et l'échantillon pour réduire le plan d'image intermédiaire de la pluralité de faisceaux lumineux et produire un réseau de foyers d'excitation à partir de la pluralité de faisceaux lumineux pour chacun de l'au moins un motif multifocal à travers l'échantillon.

5. Système de microscopie (300) selon la revendication 1, dans lequel le scanner (308) comprend un miroir galvanométrique.

6. Système de microscopie (300) selon la revendication 1, dans lequel le scanner (308) est positionné au point focal entre une première lentille de balayage (306) et une deuxième lentille de balayage (310), la première lentille de balayage (306) étant positionnée entre le premier réseau de microlentilles (304) et le scanner (308) tandis que la deuxième lentille de balayage (310) est positionnée entre le scanner (308) et l'échantillon.

7. Système de microscopie (300) selon la revendication 1, dans lequel le premier réseau de microlentilles (304) et le deuxième réseau de microlentilles (332) sont des microlentilles convergentes.

8. Système de microscopie (300) selon la revendication 1, dans lequel :
la troisième lentille de balayage (334) est positionnée entre le deuxième réseau de microlentilles (332) et le scanner (308) et la quatrième lentille de balayage (336) est positionnée entre le scanner (308) et la caméra (338).

9. Système de microscopie (300) selon la revendication 1, comprenant en outre :
un miroir dichroïque (318) positionné entre la deuxième lentille de balayage (310) et le plan d'échantillon (316).
